# FASCICULE DE BREVET EUROPEEN

(11) **EP 2 235 668 B1**
(45) Date de publication et mention de la délivrance du brevet: **03.10.2012**
(21) Numéro de dépôt: 09720110.7
(22) Date de dépôt: 22.01.2009
(51) Int. Cl.: G06K 19/077, G06K 19/02

(54) **PROCÈDE DE RÉALISATION D'ÉLÉMENTS D'IDENTIFICATION RADIOFREQUENCE ET ELEMENTS D'IDENTIFICATION RADIOFREQUENCE SUSCEPTIBLES D'ETRE OBTENUS PAR UN TEL PROCEDE**
VERFAHREN ZUR HERSTELLUNG VON FUNKFREQUENZIDENTIFIKATIONSELEMENTEN UND IN DIESEM VERFAHREN HERSTELLBARE FUNKFREQUENZIDENTIFIKATIONSELEMENTE
METHOD OF PRODUCING RADIOFREQUENCY IDENTIFICATION ELEMENTS AND RADIO-FREQUENCY IDENTIFICATION ELEMENTS OBTAINABLE BY SUCH A METHOD

(30) Priorité: 23.01.2008 FR 0850418
(43) Date de publication de la demande: 06.10.2010
(73) Titulaire: Tageos, 34830 Clapiers (FR)
(72) Inventeur: PICON, Matthieu, F-34090 Montpellier (FR); DELABY, Laurent, F-34790 Grabels (FR); SORLI, Brice, F-34530 Montagnac (FR); PASCAL-DELANNOY, Frédérique, F-34000 Montpellier (FR); FOUCARAN, Alain, F-34130 Mauguio (FR)
(74) Mandataire: Bentz, Jean-Paul
(86) Numéro de dépôt international: PCT/FR2009/000069
(87) Numéro de publication internationale: WO 2009/112684

(56) Documents cités:
- EP-A- 1 035 504
- EP-A- 1 801 739
- DE-U1- 29 923 432
- US-A1- 2006 187 056
- US-A1- 2007 138 303

## Description

L'invention se rapporte à un procédé de réalisation, par dépôt sous vide d'au moins un matériau conducteur sur un moyen de support, d'éléments d'identification radiofréquences ainsi qu'à des éléments d'identification radiofréquence pouvant être obtenus par la mise en oeuvre d'un tel procédé.

La présente invention concerne le domaine technique des éléments d'identification radiofréquence permettant l'identification d'objets, d'animaux ou de personnes.

Plus particulièrement, l'invention se rapporte à un procédé de réalisation d'étiquettes radiofréquences, de tickets et de cartes sans contacts pouvant être utilisés comme moyens d'identification, d'authentification, d'accès, de paiement, de contrôle ou de traçabilité.

Il est connu de l'état de la technique différentes solutions permettant de réaliser des transpondeurs radiofréquences sur un moyen de support, tel qu'une étiquette, un ticket ou une carte. Auparavant, ces transpondeurs radiofréquences étaient réalisés sur un support plastique, pour former une incrustation dite «inlay», collée ensuite sur un moyen de support. Néanmoins cette structure, et plus particulièrement la présence de l'inlay, présente des inconvénients en termes de coût de production, de fiabilité et induit une surépaisseur par rapport aux étiquettes classiques à code barre.

Des solutions sont donc apparues pour s'affranchir de l'utilisation de cette couche intermédiaire sur laquelle était réalisée l'antenne. Ainsi, la demande de brevet français n° FR 2 855 637 décrit un procédé de réalisation de tickets sans contact, à partir d'un papier conditionné en rouleau, dans lequel une encre conductrice est imprimée par sérigraphie directement sur le support pour réaliser l'antenne radio. Dans ce procédé, l'encre conductrice est imprimée directement au dos de la surface imprimable du papier, ce qui permet de s'affranchir de l'utilisation d'un inlay. Néanmoins, ce procède n'est pas totalement satisfaisant dans ia mesure où les encres conductrices nécessitent un temps de séchage après dépôt. Une étape de séchage ou de protection de l'antenne est alors nécessaire pour protéger la surface imprimable du papier lors de son enroulement et éviter que l'encre conductrice, encore humide, ne la salisse. Par ailleurs, ces encres conductrices présentent un faible rapport qualité prix puisqu'elles sont alternativement chères ou bien peu conductrices.

Par ailleurs, le brevet européen n° EP 1 035 504 (voir le préambule de la revendication 1) divulgue une étiquette radiofréquence comportant un support en papier/carton sur lequel est formée une antenne à laquelle une puce peut être reliée électriquement.

Selon un mode de réalisation préféré, la fabrication de l'antenne est réalisée par impression par sérigraphie. Selon d'autres modes de réalisation, la fabrication de l'antenne est réalisée par estampage, gravure ou galvanoplastie. Dans ce dernier cas, une couche d'accroche conductrice est nécessaire à la mise en oeuvre de l'électrodéposition, cette couche d'accroche étant réalisée par vaporisation sous vide de métal.

Quel que soit le procédé de fabrication choisi, il est nécessaire d'éviter une pénétration dans le support du ou des liquides mis en oeuvre. Le support peut avoir été fabriqué de façon à répondre à cette nécessité, auquel cas l'antenne est formée directement sur le support. Autrement, le support doit être adapté avant d'y former l'antenne. Dans ce dernier cas, un revêtement est appliqué à la surface du support destinée à accueillir l'antenne de sorte de lisser cette surface, et ainsi éviter une pénétration du ou des liquides utilisés pour former l'antenne.

La conductivité d'un tel transpondeur peut elle aussi être améliorée. En outre, lorsque le support est thermiquement sensible, la vitesse de dépôt est limitée par la température admissible par le support.

En outre, lorsque l'antenne est réalisée par impression d'encre conductrice, le temps de séchage est également long et une étape de chauffage, qui permettrait de réduire ce temps de séchage, est délicate à mettre en oeuvre dans la mesure où le support est sensible aux températures élevées.

D'autre part, les éléments d'identification radiofréquence de l'état de la technique sont parfois équipés de capteurs pour effectuer des mesures de paramètres physiques caractéristiques des conditions d'utilisation de l'objet identifié par l'élément d'identification (température de stockage, variation de températures lors du transport, humidité, présence de substances polluantes ou dangereuse, chocs, etc.). Néanmoins, ces capteurs équipés de batteries pour l'enregistrement régulier des mesures sont onéreux. Ce sont, en outre des produits finis rapportés sur l'élément d'identification radiofréquence, et non réalisés directement dessus, ce qui augmente le coût de production final.

D'autre part, les éléments d'identification radiofréquence de l'état de la technique sont parfois équipés de capteurs pour effectuer des mesures de paramètres physiques caractéristiques des conditions d'utilisation de l'objet identifié par l'élément d'identification (température de stockage, variation de températures lors du transport, humidité, présence de substances polluantes ou dangereuse, chocs, etc.). Néanmoins, ces capteurs équipés de batteries pour l'enregistrement régulier des mesures sont onéreux. Ce sont, en outre des produits finis rapportés sur l'élément d'identification radiofréquence, et non réalisés directement dessus, ce qui augmente le coût de production final.

La présente invention vise à pallier les inconvénients de l'état de la technique en proposant un procédé de réalisation permettant de produire à bas coûts des éléments d'identification radiofréquence à la fois performants et discrets.

Plus particulièrement, l'invention propose de réaliser des transpondeurs radiofréquences de conductivité suffisante pour garantir des performances optimales, tout en présentant une bonne adhérence au substrat et sans nécessiter de conditions de séchage dispendieuses, de manière à en faciliter la production.

Selon un autre aspect, l'invention prévoit également d'obtenir des éléments d'identification radiofréquence permettant d'améliorer le suivi des produits sans être trop onéreux.

Pour ce faire, la présente invention propose d'utiliser une technique de dépôt sous vide pour former l'antenne sur un moyen de support préalablement recouvert d'un enduit de liaison destiné à protéger thermiquement le moyen de support lors de la phase de dépôt du matériau conducteur par évaporation sous vide tel qu'une couche de vernis.

Plus précisément, l'invention a pour objet un procédé de réalisation d'au moins un élément d'identification radiofréquence selon la revendication 1.

Le terme de moyen de support s'applique à tout type de substrat, imprimable ou non, tel que du papier, du carton ou éventuellement du PET.

D'autre part, le terme d'enduit de liaison fait référence à une préparation de consistance fluide ou pâteuse applicable par impression ou vaporisation en couche continue sur un moyen de support et dont l'épaisseur est faible relativement à l'étendue superficielle.

Selon des modes de réalisation particuliers :
- le procédé comporte une étape d'impression sur une surface d'impression du moyen de support ;
- le dépôt sous vide est réalisé par évaporation thermique ;
- une huile est imprimée sur les parties de la surface de réception recouverte de l'enduit de liaison qui ne sont pas destinées à recevoir le matériau conducteur ;
- le matériau conducteur est déposé sur la surface de réception recouverte de l'enduit de liaison, au travers d'un masque sérigraphique mobile suivant le mouvement du moyen de support ;
- la surface de réception est autocollante et protégée par une couche de protection prédécoupée formant le masque sérigraphique ;
- ledit au moins un matériau conducteur est en aluminium ;au moins un capteur est réalisé par dépôts successifs de couches minces d'au moins un matériau conducteur sur au moins une partie de la surface de réception du moyen de support recouverte de l'enduit de liaison ; et
- au moins une microbatterie est réalisée par dépôts successifs de couches minces d'au moins un matériau conducteur sur au moins une partie de la surface de réception du moyen de support recouverte de l'enduit de liaison.

Selon un autre aspect, l'invention concerne un élément d'identification radiofréquence selon la revendication 9.

Selon des modes de réalisation particuliers :
- le moyen de support est imprimable,
- l'enduit de liaison est un vernis ;
- l'enduit de liaison est autocollant et recouvert d'une couche de protection prédécoupée constituant un masque sérigraphique de la forme de l'antenne ;
- L'élément d'identification comporte en outre au moins un capteur présentant des couches minces d'au moins un matériau conducteur formées sur la surface de réception au moins partiellement recouverte de l'enduit de liaison ;
- l'enduit de liaison présente des propriétés physiques permettant d'interagir avec le capteur ; et
- L'élément d'identification radiofréquence comporte en outre au moins une microbatterie présentant des couches minces d'au moins un matériau conducteur formées sur la surface de réception au moins partiellement recouverte de l'enduit de liaison.

L'invention concerne également l'utilisation d'éléments d'identification radiofréquence pour certifier le respect de normes de conditionnement de produits alimentaires ou médicaux individués.

L'enduit de liaison permet notamment d'améliorer les propriétés d'adhérence entre le moyen de support et le matériau conducteur, ce qui permet d'enrouler le moyen de support immédiatement après l'opération de dépôt du matériau conducteur, sans nécessiter d'étape de séchage ou de moyen de protection. Par ailleurs, l'enduit de liaison permet également de protéger le moyen de support lors du dépôt du matériau conducteur formant l'antenne. En outre, la conductivité du dépôt de matériau conducteur sur l'enduit de liaison est améliorée par rapport aux performances des procédés de l'état antérieur de la technique.

Le dépôt sous vide de couches minces d'un matériau conducteur sur un enduit de liaison permet en outre d'obtenir des dépôts très conducteurs dont l'épaisseur peut être contrôlée. Ainsi, il est possible d'adapter la résistance carrée des antennes et l'épaisseur du dépôt en fonction de l'application, des performances recherchées et de l'utilisation du produit fini.

Plus particulièrement, le dépôt d'aluminium par évaporation thermique sur un support d'impression recouvert d'un vernis présente des résultats particulièrement intéressants, en termes d'adhérence et de conductivité.

Le vernis permet d'obtenir une surface de dépôt particulièrement lisse, ce qui augmente la conductivité du dépôt, protège thermiquement le support lors de la phase de dépôt, en utilisant des vernis spéciaux pour la protection thermique, et enfin, réduit le coût de l'impression ce qui permet d'obtenir un excellent ratio performance- coût.

Par ailleurs, le dépôt sous vide de couches minces de matériaux permet de réaliser des capteurs directement sur le moyen de support au moins partiellement recouvert de l'enduit de liaison, en utilisant le même procédé que celui utilisé pour la production des antennes. C'est donc un gain en termes de temps et de coût.

En outre, ce procédé est moins polluant que les procédés de l'état de la technique dans la mesure où il n'entraîne pas de rejets polluants et où les produits comportent moins de matière polluante. En effet, les couches minces de matériau conducteur pour réaliser l'antenne sont moins épaisses et le matériau conducteur, avantageusement de l'aluminium ou du cuivre, moins polluant que l'argent contenu dans les encres.

D'autres caractéristiques et avantages de l'invention ressortiront à la lecture qui suit d'un exemple de réalisation détaillé, en référence aux figures qui représentent respectivement :
- les figures 1a et 1b, deux schémas simplifiés d'un premier mode de réalisation d'un dispositif pour la mise en oeuvre du procédé selon l'invention ;
- la figure 1c, un schéma simplifié d'un deuxième mode de réalisation d'un dispositif pour la mise en oeuvre du procédé selon l'invention ;
- les figure 2a et 2b, respectivement des vues de dessus et en coupe d'un exemple de réalisation d'un élément d'identification radiofréquence selon l'invention.

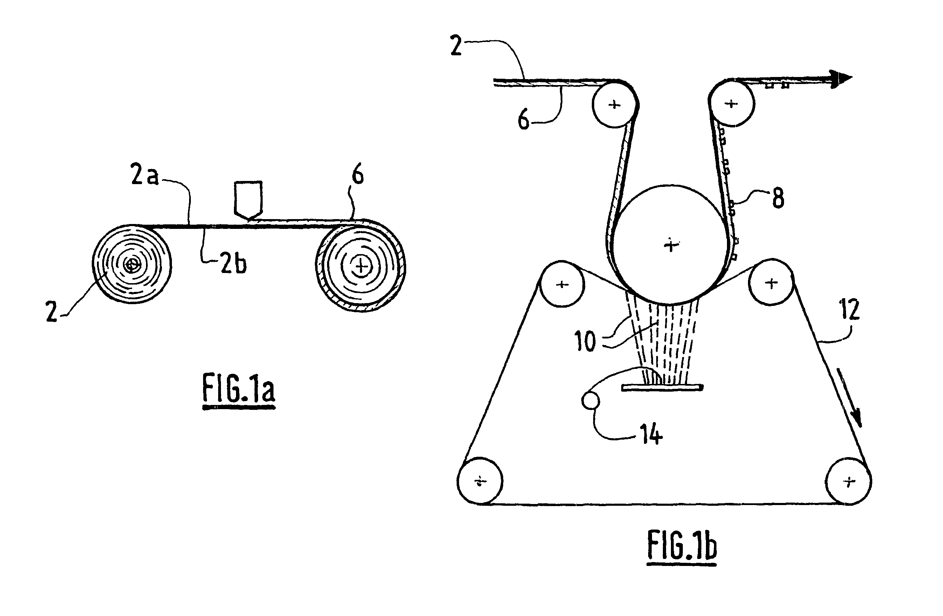

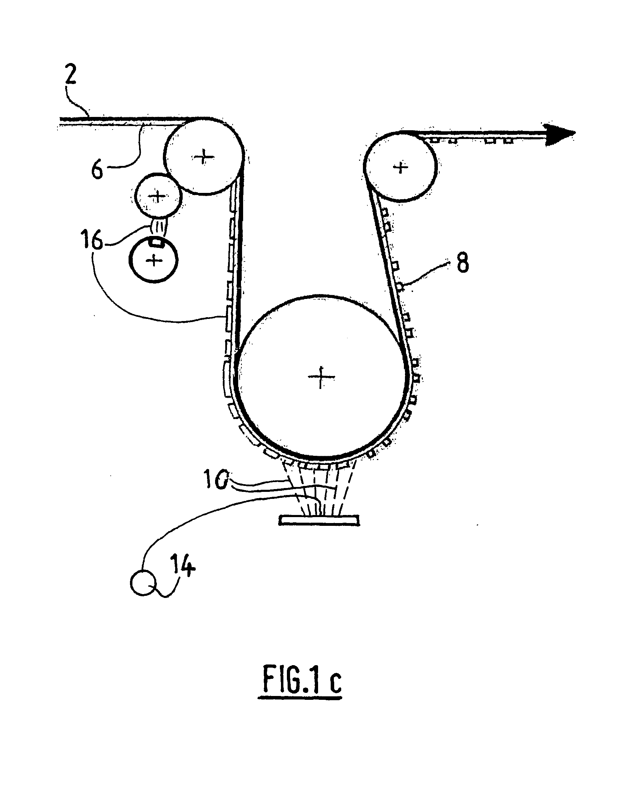

Un dispositif permettant la mise en oeuvre d'un procédé de réalisation d'éléments d'identification radiofréquence selon l'invention va maintenant être décrit en référence aux figures 1 a et 1 b.

L'élément d'identification radiofréquence selon l'invention est réalisé à partir d'un moyen de support 2, avantageusement conditionné en rouleau de papier de 30 à 40cm de large ou plus et de plusieurs centaines de mètres de long. Le moyen de support 2 est composé d'une surface de réception 2a et d'une surface d'impression 2b. De préférence, ces surfaces de dépôt 2a et d'impression 2b sont différentes et disposées respectivement sur chacune des deux faces du moyen de support 2.

Alternativement, le support d'impression 2 peut être du PET, préalablement, également, conditionné en rouleaux ou bien prédécoupé au format des éléments d'identification radiofréquence à réaliser.

Le support d'impression 2, dont la surface d'impression 2b est éventuellement pré-imprimée, est destiné à plusieurs techniques d'impression dont l'impression par transfert thermique, le jet d'encre, la flexographie, l'offset, etc.

Une étape du procédé de réalisation d'éléments d'identification radiofréquence 2 selon l'invention consiste à recouvrir la surface de réception 2a du moyen de support 2 d'un enduit de liaison 6. L' enduit de liaison 6 est un enduit spécifique destiné à la protection thermique .

L'enduit de liaison 6 est imprimé sur la surface de réception 2a du moyen de support 2 par flexographie ou tout autre technique adaptée telle que la vaporisation. Il peut recouvrir totalement, ou seulement partiellement, cette surface de réception 2a.

L'étape de formation d'une antenne radiofréquence 8 sur la surface de réception 2a du moyen de support 2 peut ensuite être réalisée. Pour ce faire, un matériau conducteur 10, tel que de l'aluminium, est déposé par évaporation thermique sous vide.

Selon des variantes de réalisation, le matériau conducteur 10 peut être du cuivre, éventuellement déposé par pulvérisation cathodique, ou bien tout autre combinaison de ces modes de réalisation.

Il est à noter que la surface de réception 2a et la surface d'impression 2b du moyen de support peuvent être confondues par exemple si l'antenne 8 est formée dans les motifs imprimés. L'enduit de liaison peut alors n'être déposé que sur la surface destinée à recevoir la ou les antennes.

Selon ce mode de réalisation, la formation de l'antenne radiofréquence 8 est réalisée pas à pas. Un masque sérigraphique 12 reste alors en position fixe par rapport au mouvement du rouleau de papier formant le moyen de support 2. Le mouvement de ce rouleau de papier est par ailleurs discontinu et l'évaporation du matériau conducteur 10 est réalisée lorsque le rouleau est arrêté. Le matériau conducteur 10 est alors déposé, en une couche continue ou en plusieurs couches minces, sur la surface de réception 2a du moyen de support 2, au travers du masque sérigraphique 12 fixe.

Alternativement, ce procédé de masquage est remplacé par un système utilisant un champ électrique attirant le matériau conducteur 10 à des endroits précis de la surface de réception 2a du moyen de support 2.

La formation de l'antenne 8 peut également être continue. Le masque sérigraphique 12 est alors mobile et suit le mouvement du moyen de support 2. Ainsi, le dispositif est alimenté en matériau conducteur 10 par l'intermédiaire d'un fil d'alimentation 14.

Avantageusement, la surface de réception 2a du moyen de support 2 est autocollante et protégée par une couche de protection. Dans ce cas, le papier de protection peut présenter une découpe correspondant à la forme de l'antenne radiofréquence 8 et ainsi constituer un masque sérigraphique 12 mobile. La couche autocollante peut constituer l'enduit de liaison 6. Alternativement un vernis de neutralisation de l'autocollant peut être imprimé ou vaporisé sur la couche autocollante, à travers les ouvertures de la couche de protection, préalablement au dépôt du matériau conducteur.

La figure 1c illustre un deuxième mode de réalisation de l'antenne 8 sur le moyen de support 2. Dans ce deuxième mode de réalisation, pas à pas ou continu, une huile 16 est imprimée sur la surface de réception 2a du moyen de support 2, préalablement recouverte de l'enduit de liaison 6, avant le dépôt du matériau conducteur 10 formant l'antenne 8. Il est à noter que grâce à l'enduit de liaison 6, l'huile 16 n'est pas absorbée par le moyen de support 2 et reste donc en surface. L'huile 16 n'est imprimée que sur les parties qui ne sont pas destinées à recevoir le matériau conducteur 10 constituant l'antenne 8. Lors du dépôt du matériau conducteur 10, en raison de la chaleur dégagée par les sources d'évaporation, le dégazage de l'huile 16 empêche le matériau conducteur 10 de se déposer localement et le contraint à se déposer sur les zones non imprimées d'huile 16, permettant ainsi de réaliser le motif de l'antenne 8.

Selon ce deuxième mode de réalisation, une épaisseur de matériau conducteur comprise entre 250 nm et 1,5 µm, voire moins, peut être obtenue avec une vitesse du moyen de support allant de 10 m/min à 50m/min.

Une fois l'antenne radiofréquence 8 formée sur la surface de réception 2a du moyen de support 2 recouvert de l'enduit de liaison 6, la jonction entre l'antenne 8 et une puce électronique 20 peut être réalisée. Cette jonction peut être réalisée par thermocompression en utilisant des puces nues et « bumpées », c'est-à-dire dont les bornes de la puce sont matérialisées par des plots métalliques facilitant la connexion. Ces puces sont prises sur une galette sciée, de silicium, très pure, dite « wafer » et fixées par une colle conductrice anisotropique. Selon une variante, les puces utilisées peuvent être des puces conditionnées en « strap », c'est-à-dire sur un petit support à deux zones recouvertes d'un élément conducteur, en utilisant une colle conductrice isotropique. Alternativement, les puces peuvent être réalisées par impression de polymère.

Avantageusement, le procédé de fabrication d'éléments d'identification radiofréquence comporte en outre une étape de réalisation de capteurs 22 permettant d'améliorer le suivi des produits ; c'est-à-dire leur traçabilité, et de certifier leur validité. Les capteurs 22 sont alors formés sur la surface de réception 2a du moyen de support 2 en utilisant le même procédé que celui utilisé pour la production des antennes radiofréquences 8. Les capteurs sont réalisés par dépôts successifs de couches minces de plusieurs matériaux sur au moins une partie de la surface de réception 2a du moyen de support 2 recouverte de l'enduit de liaison 6.

L'étape de réalisation de capteurs 22 peut être réalisée simultanément à l'étape de réalisation des antennes 8, ou bien faire l'objet de plusieurs étapes antérieures et/ou ultérieures.

Avantageusement, des microbatteries sont formées seules ou en liaison avec ces capteurs 22 sur le moyen de support 2, en utilisant le même procédé de dépôt que pour les antennes et les capteurs 22.

Avantageusement, l'enduit de liaison 6 présente des propriétés physiques particulières (ferroélectriques, diélectriques, thermiques, optiques ou mécaniques) pouvant varier proportionnellement aux variations d'une grandeur physique environnementale et ainsi interagir avec les capteurs 22.

Les éléments d'identification radiofréquence peuvent dès lors être associées à des boîtes de médicament ou de produits frais. En effet, les produits frais ainsi que les produits pharmaceutiques (médicaments, vaccins...) et médicaux (poches de sang) sont stockés ou transportés dans des conditions environnementales particulières, notamment dans certaines plages de températures, de pressions, ou dans certains milieux polluants ne devant pas dépasser certaines valeurs seuils. Ces éléments d'identification radiofréquence peuvent alors être dimensionnés pour permettre de certifier le respect de ces conditions ou au contraire révéler une rupture des conditions de stockage ou de transport.

Les rouleaux de moyen de support 2 comportant les transpondeurs radiofréquences, formés par la combinaison de l'antenne 8 avec la puce électronique 20, et éventuellement les capteurs et les microbatteries sont ensuite conditionnés en rouleau d'étiquettes d'identification radiofréquence. Ces étiquettes seront ensuite découpées en rouleaux individuels, puis laminées et découpées à mi-chair du papier pour réaliser les éléments d'identification radiofréquence à l'unité, conditionnés en rouleaux individuels.

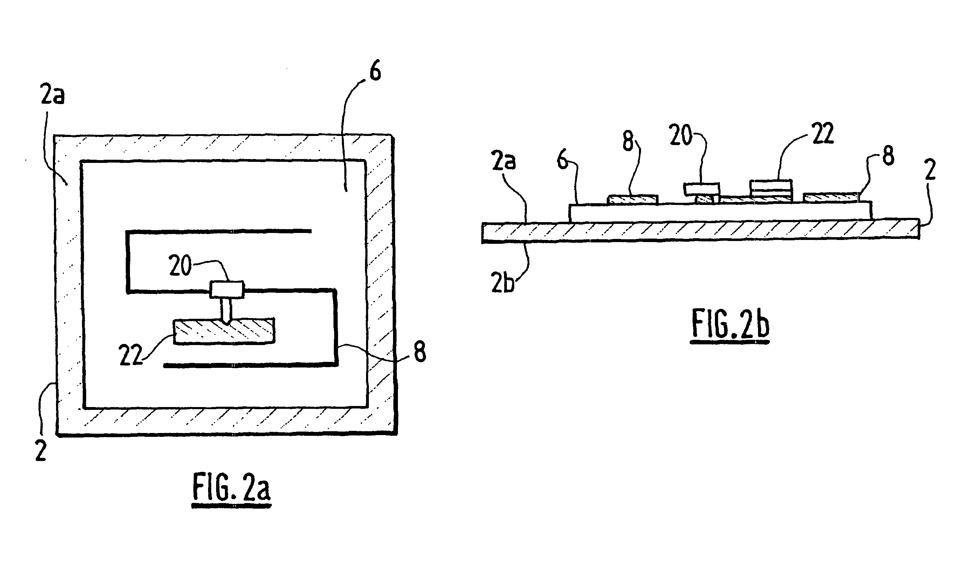

Un exemple d'élément d'identification radiofréquence susceptible d'être obtenu par la mise en oeuvre du procédé de réalisation décrit précédemment va maintenant être décrit en référence aux figures 2a et 2b.

Cet élément d'identification radiofréquence comporte alors un support d'impression 2 pourvue d'une surface de réception 2a et d'une surface d'impression 2b. La surface de réception 2a est au moins partiellement recouverte d'un enduit de liaison 6 sur lequel est formé une antenne 8 reliée à une puce électronique 20.

En outre, l'élément d'identification radio fréquence présente avantageusement une pluralité de couches minces formées sur la surface de réception 2a recouverte de l'enduit de liaison 6, formant au moins un capteur 22 et/ou des microbatteries.

Selon un mode de réalisation non représenté, la surface de réception 2a du moyen de support 2 peut être autocollante et recouverte d'une couche de protection présentant une découpe de la forme de l'antenne 8 et des capteurs 22.

L'élément d'identification radiofréquence ainsi obtenu permet de certifier le respect des conditions de transport et de stockage préconisées pour des produits alimentaires ou médicaux individués. Ainsi, chaque produit présente un élément d'identification radiofréquence spécifique et non plus commun à tout un lot.

En effet, ces éléments d'identification radiofréquences peu coûteux, de faible épaisseur et présentant des capteurs peuvent être utilisés pour garantir que chaque produit individué a été conditionné selon les normes en vigueur. Ainsi, lorsque aucun message indiquant une rupture n'est reçu lors de la lecture, le système garantit que le produit a été bien conditionné. Les conditions surveillées peuvent par exemple être la température, la pression, les chocs, la présence de gaz toxiques au-delà d'un certain seuil, etc. Les éléments d'identification radiofréquence sont alors appliquées à chaque produit, ce qui permet un suivi individué et ininterrompu.

L'invention n'est pas limitée aux exemples de réalisation décrits et représentés. L'homme du métier est à même de réaliser différentes variantes du procédé de réalisation des éléments d'identification présentés ci-dessus, sans sortir du cadre de l'invention.

## Revendications

1. Procédé de réalisation d'au moins un élément d'identification radiofréquence consistant à réaliser au moins une antenne (8) sur un moyen de support (2) par dépôt sous vide d'au moins un matériau conducteur (10) sur une surface de réception (2a) du moyen de support (2), au moins une partie de la surface de réception (2a) étant, dans une étape préalable au dépôt du matériau conducteur, recouverte d'un enduit de liaison (6), **caractérisé en ce que** l'enduit de liaison est destiné à protéger thermiquement le moyen de support lors de la phase de dépôt du matériau conducteur par évaporation sous vide.

2. Procédé selon la revendication 1, comportant une étape d'impression sur une surface d'impression (2b) du moyen de support (2).

3. Procédé selon la revendication 1 ou 2, dans lequel le dépôt sous vide est réalisé par évaporation thermique.

4. Procédé selon l'une quelconque des revendications 1 à 3, dans lequel une huile (16) est imprimée sur les parties de la surface de réception (2a) recouverte de l'enduit de liaison (6) qui ne sont pas destinées à recevoir le matériau conducteur (10).

5. Procédé selon l'une quelconque des revendications 1 à 4, dans lequel le matériau conducteur (10) est déposé sur la surface de réception (2a) recouverte de l'enduit de liaison (6), au travers d'un masque sérigraphique (12) mobile suivant le mouvement du moyen de support (2).

6. Procédé selon la revendication 5, dans lequel la surface de réception (2a) est autocollante et protégée par une couche de protection prédécoupée formant le masque sérigraphique (12).

7. Procédé selon l'une quelconque des revendications 1 à 6, dans lequel ledit au moins un matériau conducteur est en aluminium.

8. Procédé de réalisation selon l'une quelconque des revendications 1 à 7, dans lequel au moins un capteur est réalisé par dépôts successifs de couches minces d'au moins un matériau conducteur sur au moins une partie de la surface de réception du moyen de support (2) recouverte de l'enduit de liaison.

9. Procédé de réalisation selon l'une quelconque des revendications 1 à 8, dans lequel au moins une microbatterie est réalisée par dépôts successifs de couches minces d'au moins un matériau conducteur sur au moins une partie de la surface de réception du moyen de support (2) recouverte de l'enduit de liaison.

10. Élément d'identification radiofréquence susceptible d'être obtenu par le procédé selon l'une quelconque des revendications 1 à 9, comportant un moyen de support (2) et au moins une antenne (8) en un matériau conducteur (10), le moyen de support (2) comportant une surface de réception (2a) au moins partiellement recouverte d'un enduit de liaison (6) sur lequel est formée l'antenne (8), **caractérisé en ce que** l'enduit de liaison est destiné à protéger thermiquement le moyen de support lors de la phase de dépôt du matériau conducteur par évaporation sous vide.

11. Élément d'identification radiofréquence selon la revendication 10, dans lequel le moyen de support est imprimable.

12. Élément d'identification radiofréquence selon la revendication 10 ou 11, dans lequel l'enduit de liaison (6) est un vernis.

13. Élément d'identification radiofréquence selon l'une quelconque des revendications 10 à 12, dans lequel l'enduit de liaison (6) est autocollant et recouvert d'une couche de protection prédécoupée constituant un masque sérigraphique (12) de la forme de l'antenne (8).

14. Élément d'identification radiofréquence selon l'une quelconque des revendications 10 à 13, comportant en outre au moins un capteur présentant des couches minces d'au moins un matériau conducteur (10) formées sur la surface de réception (2a) au moins partiellement recouverte de l'enduit de liaison (6).

15. Élément d'identification radiofréquence selon l'une quelconque des revendications 10 à 14, dans lequel l'enduit de liaison (6) présente des propriétés physiques permettant d'interagir avec le capteur (22).

16. Élément d'identification radiofréquence selon l'une quelconque des revendications 10 à 15, comportant en outre au moins une microbatterie présentant des couches minces d'au moins un matériau conducteur (10) formées sur la surface de réception (2a) au moins partiellement recouverte de l'enduit de liaison (6).

17. Utilisation d'éléments d'identification radiofréquence, notamment selon l'une quelconque des revendications 10 à 16, pour certifier le respect des normes de conditionnement de produits alimentaires individués.

18. Utilisation d'éléments d'identification radiofréquence, notamment selon l'une quelconque des revendications 10 à 16, pour certifier le respect des normes de conditionnement de produits médicaux individués.

## Claims

1. Method for producing at least one radio frequency identification element consisting in producing at least one antenna (8) on a support means (2) by vacuum deposition of at least one conductive material (10) on a receiving surface (2a) of the support means (2), at least a portion of the receiving surface (2a) being, in a step prior to the deposition of the conductive material, covered with a link coating (6), **characterized in that** the link coating is intended to thermally protect the support means during the phase of deposition of the conductive material by vacuum evaporation.

2. Method according to Claim 1, comprising a step of printing on a print surface (2b) of the support means (2).

3. Method according to Claim 1 or 2, in which the vacuum deposition is done by thermal evaporation.

4. Method according to any one of Claims 1 to 3, in which an oil (16) is printed on the portions of the receiving surface (2a) covered with the link coating (6) which are not intended to receive the conductive material (10).

5. Method according to any one of Claims 1 to 4, in which the conductive material (10) is deposited on the receiving surface (2a) covered with the link coating (6), through a mobile screen-printing mask (12) following the movement of the support means (2).

6. Method according to Claim 5, in which the receiving surface (2a) is self-adhesive and protected by a precut protection layer forming the screen-printing mask (12).

7. Method according to any one of Claims 1 to 6, in which said at least one conductive material is aluminium.

8. Production method according to any one of Claims 1 to 7, in which at least one sensor is produced by successive depositions of thin layers of at least one conductive material on at least a portion of the receiving surface of the support means (2) covered with the link coating.

9. Production method according to any one of Claims 1 to 8, in which at least one microbattery is produced by successive depositions of thin layers of at least one conductive material on at least a portion of the receiving surface of the support means (2) covered with the link coating.

10. Radio frequency identification element which can be obtained by the method according to any one of Claims 1 to 9, comprising a support means (2) and at least one antenna (8) made of a conductive material (10), the support means (2) comprising a receiving surface (2a) at least partially covered with a link coating (6) on which is formed the antenna (8), **characterized in that** the link coating is intended to thermally protect the support means during the phase of deposition of the conductive material by vacuum evaporation.

11. Radio frequency identification element according to Claim 10, in which the support means is printable.

12. Radio frequency identification element according to Claim 10 or 11, in which the link coating (6) is a varnish.

13. Radio frequency identification element according to any one of Claims 10 to 12, in which the link coating (6) is self-adhesive and covered by a precut protection layer forming a screen-printing mask (12) of the form of the antenna (8).

14. Radio frequency identification element according to any one of Claims 10 to 13, also comprising at least one sensor having thin layers of at least one conductive material (10), formed on the receiving surface (2a) at least partially covered with the link coating (6).

15. Radio frequency identification element according to any one of Claims 10 to 14, in which the link coating (6) has physical properties allowing interaction with the sensor (22).

16. Radio frequency identification element according to any one of Claims 10 to 15, also comprising at least one microbattery having thin layers of at least one conductive material (10), formed on the receiving surface (2a) at least partially covered with the link coating (6).

17. Use of radio frequency identification elements, notably according to any one of Claims 10 to 16, for certifying compliance with individually-packed food product packaging standards.

18. Use of radio frequency identification elements, notably according to any one of Claims 10 to 16, for certifying compliance with individually-packed medical product packaging standards.

## Patentansprüche

1. Verfahren zur Herstellung mindestens eines Radiofrequenz-Identifikationselements, das darin besteht, mindestens eine Antenne (8) auf einer Trägereinrichtung (2) durch Vakuumabscheidung mindestens eines leitenden Materials (10) auf eine Aufnahmefläche (2a) der Trägereinrichtung (2) herzustellen, wobei mindestens ein Teil der Aufnahmefläche (2a) in einem Schritt vor der Abscheidung des leitenden Materials mit einem Verbindungsbelag (6) bedeckt wird, **dadurch gekennzeichnet, dass** der Verbindungsbelag dazu bestimmt ist, die Trägereinrichtung in der Abscheidungsphase des leitenden Materials durch Vakuumverdampfung thermisch zu schützen.

2. Verfahren nach Anspruch 1, das einen Schritten des Bedruckens einer Druckfläche (2b) der Trägereinrichtung (2) aufweist.

3. Verfahren nach Anspruch 1 oder 2, bei dem die Vakuumabscheidung durch thermische Aufdampfung erfolgt.

4. Verfahren nach einem der Ansprüche 1 bis 3, bei dem ein Öl (16) auf die Teile der mit dem Verbindungsbelag (6) bedeckten Aufnahmefläche (2a) gedruckt wird, die nicht dazu bestimmt sind, das leitende Material (10) aufzunehmen.

5. Verfahren nach einem der Ansprüche 1 bis 4, bei dem das leitende Material (10) auf die mit dem Verbindungsbelag (6) bedeckte Aufnahmefläche (2a) durch eine Siebdruckmaske (12) hindurch abgeschieden wird, die gemäß der Bewegung der Trägereinrichtung (2) beweglich ist.

6. Verfahren nach Anspruch 5, bei dem die Aufnahmefläche (2a) selbstklebend ist und von einer vorab ausgeschnittenen Schutzschicht geschützt wird, die die Siebdruckmaske (12) bildet.

7. Verfahren nach einem der Ansprüche 1 bis 6, bei dem das mindestens eine leitende Material aus Aluminium ist.

8. Herstellungsverfahren nach einem der Ansprüche 1 bis 7, bei dem mindestens ein Sensor durch aufeinanderfolgende Abscheidungen dünner Schichten mindestens eines leitenden Materials auf mindestens einen Teil der mit dem Verbindungsbelag bedeckten Aufnahmefläche der Trägereinrichtung (2) hergestellt wird.

9. Verfahren nach einem der Ansprüche 1 bis 8, bei dem mindestens eine Mikrobatterie durch aufeinanderfolgende Abscheidungen dünner Schichten mindestens eines leitenden Materials auf mindestens einen Teil der mit dem Verbindungsbelag bedeckten Aufnahmefläche der Trägereinrichtung (2) hergestellt wird.

10. Radiofrequenz-Identifikationselement, das durch das Verfahren nach einem der Ansprüche 1 bis 9 erhalten werden kann, das eine Trägereinrichtung (2) und mindestens eine Antenne (8) aus einem leitenden Material (10) aufweist, wobei die Trägereinrichtung (2) eine mindestens teilweise mit einem Verbindungsbelag (6) bedeckte Aufnahmefläche (2a) aufweist, auf dem die Antenne (8) geformt wird, **dadurch gekennzeichnet, dass** der Verbindungsbelag dazu bestimmt ist, die Trägereinrichtung in der Phase des Abscheidens des leitenden Materials durch Vakuumaufdampfung thermisch zu schützen.

11. Radiofrequenz-Identifikationselement nach Anspruch 10, bei dem die Trägereinrichtung bedruckbar ist.

12. Radiofrequenz-Identifikationselement nach Anspruch 10 oder 11, bei dem der Verbindungsbelag (6) ein Firnis ist.

13. Radiofrequenz-Identifikationselement nach einem der Ansprüche 10 bis 12, bei dem der Verbindungsbelag (6) selbstklebend und mit einer vorab ausgeschnittenen Schutzschicht bedeckt ist, die eine Siebdruckmaske (12) der Form der Antenne (8) bildet.

14. Radiofrequenz-Identifikationselement nach einem der Ansprüche 10 bis 13, das außerdem mindestens einen Sensor aufweist, der dünne Schichten mindestens eines leitenden Materials (10) aufweist, die auf der zumindest teilweise mit dem Verbindungsbelag (6) bedeckten Aufnahmefläche (2a) geformt sind.

15. Radiofrequenz-Identifikationselement nach einem der Ansprüche 10 bis 14, bei dem der Verbindungsbelag (6) physikalische Eigenschaften aufweist, die es ermöglichen, mit dem Sensor (22) zu interagieren.

16. Radiofrequenz-Identifikationselement nach einem der Ansprüche 10 bis 15, das außerdem mindestens eine Mikrobatterie aufweist, die dünne Schichten mindestens eines leitenden Materials (10) aufweist, die auf der teilweise mit dem Verbindungsbelag (6) bedeckten Aufnahmefläche (2a) geformt sind.

17. Verwendung eines Radiofrequenz-Identifikationselements insbesondere nach einem der Ansprüche 10 bis 16, um die Einhaltung der Verpackungsnormen von individualisierten Lebensmittelprodukten zu zertifizieren.

18. Verwendung eines Radiofrequenz-Identifikationselements insbesondere nach einem der Ansprüche 10 bis 16, um die Einhaltung der Verpackungsnormen von individualisierten Medizinprodukten zu zertifizieren.
